# EUROPEAN PATENT APPLICATION

(11) **EP 4 116 211 A1**
(43) Date of publication of application: **11.01.2023**
(21) Application number: 22182928.6
(22) Date of filing: 04.07.2022
(51) Int. Cl.: B65D 41/28, A47J 41/00

(54) **FLASK CAP**

(30) Priority: 06.07.2021 JP 2021112251
(71) Applicant: Thermos K.K., Tsubame-shi Niigata (JP); Thermos L.L.C., Schaumburg, IL 60173 (US)
(72) Inventor: IMAMURA, Keita, Niigata-ken (JP); TAMANOUCHI, Takeshi, Niigata-ken (JP)
(74) Representative: Barker Brettell LLP

(57) **Abstract**

[Summary]

[Problem] To provide a cap unit and a container having a cap that make it possible, by means of a simple structure, to restrict deep penetration of a water seal gasket inside a protuberance.

[Solution] A cap unit comprising: a lid element 11 provided with an inner plug 12 which is fitted into an inner side of a container main body 2 that is open at the top, from an upper opening portion 2d of the container main body 2; and a water seal gasket 16 for sealing an area between the inner plug 12 and a protuberance 9 provided on the inner side of the container main body 2, in a state of attachment to an outer circumferential portion of the inner plug 12 along the whole circumference, wherein the lid element 11 has a structure for closing off the upper opening portion 2d, and the lid element 11 has an abutment portion 21 which is arranged on a lower portion of the inner plug 12 and abuts the protuberance 9 from an upper side.

## Description

### [Technical Field]

The present invention relates to a cap unit and to a container having a cap.

### [Background Art]

Conventional cap units are known from the disclosure of Patent Documents 1-3, for example. A cap unit has a structure comprising: a lid element provided with an inner plug which is fitted into an upper opening portion of a container main body, and a water seal gasket which is fitted to an outer circumferential portion of the inner plug and seals the area between the inner plug and a protuberance provided on an inner side of the container main body, and the lid element, having been attached by screwing together a female screw portion on the container main body and a male screw portion on the inner plug, closes off the upper opening portion of the container main body.

In the structure of Patent Document 1, the water seal gasket contacts the protuberance from an upper side and is fitted inside the protuberance. In this case, if a user turns the lid element excessively (screws in the lid element excessively) in a closure direction when closing off the upper opening portion of the container main body with the lid element, for example, this may cause deep penetration of the water seal gasket inside the protuberance because of elastic deformation, and an increase in the opening torque when the container main body is next opened. Furthermore, the temperature of a high-temperature beverage stored in the container main body may drop, leading to a reduction in pressure inside the container main body, so that a downward pulling force may act on the inner plug and the water seal gasket, and this may also cause deep penetration of the water seal gasket inside the protuberance. Furthermore, if the inner plug increases in diameter due to thermal expansion while the water seal gasket is penetrating deeply inside the protuberance, this also tends to make an increase in the opening torque more likely.

In Patent Document 2, deep penetration of the water seal gasket inside the protuberance is restricted by causing a lower end of a circumferential wall portion of an outer lid to abut a shoulder portion of an outer container from the upper side.

Furthermore, in Patent Document 3, deep penetration of the water seal gasket inside the protuberance is restricted by causing an upper end (circumferential edge portion) of the upper opening portion of the container main body to contact a lower surface of an upper wall portion of an outer lid. Moreover, in order to inhibit a phenomenon where the upper end of the upper opening portion of the container main body bites into the lower surface of the upper wall portion of the outer lid during closure in Patent Document 3, either an outer container or an inner container is folded (rounded) and welded at the upper end of the upper opening portion.

### [Prior Art Documents]

### [Patent Documents]

[Patent Document 1] JP 2020-186014 A
[Patent Document 2] JP 2020-193036 A
[Patent Document 3] JP 2020-189678 A

### [Summary of the Invention]

### [Problems to be Solved by the Invention]

There is room for improvement in cap units of this type so that it is possible, by means of a simple structure, to restrict deep penetration of the water seal gasket inside the protuberance, regardless of the extent of screwing of the lid element during closure and internal pressure fluctuations, etc. in the container main body.

An objective of the present invention lies in providing a cap unit and a container having a cap that make it possible, by means of a simple structure, to restrict deep penetration of a water seal gasket inside a protuberance.

### [Means for Solving the Problems]

One mode of a cap unit of the present invention comprises: a lid element provided with an inner plug which is fitted into an inner side of a container main body that is open at the top, from an upper opening portion of the container main body; and a water seal gasket for sealing an area between the inner plug and a protuberance provided on the inner side of the container main body, in a state of attachment to an outer circumferential portion of the inner plug along the whole circumference, the lid element has a structure for closing off the upper opening portion, and the lid element has an abutment portion which is arranged on a lower portion of the inner plug and abuts the protuberance from an upper side.

In the abovementioned cap unit, the abutment portion is preferably formed extending in a circumferential direction.

In the abovementioned cap unit, preferably, the lid element has a step portion arranged on a lower side of the abutment portion and on an upper side of the water seal gasket, and the step portion faces the protuberance, is indented further inward than the abutment portion, and does not contact the protuberance.

In the abovementioned cap unit, the inner plug is preferably attached to the container main body by screwing a male screw portion provided on the outer circumferential portion of the inner plug together with a female screw portion provided on an inner circumferential portion of the container main body.

In the abovementioned cap unit, preferably, the lid element has a top lid connected to an upper end portion of the inner plug and having a larger outer diameter dimension than the inner plug, the top lid is positioned on an upper side of the upper opening portion, and a gap is provided between the top lid and the upper opening portion in a state in which the abutment portion has abutted the protuberance.

In the abovementioned cap unit, the outer diameter dimension of the lid element is preferably smaller than the outer diameter dimension of the container main body and larger than an inner diameter dimension of the upper opening portion.

Furthermore, one mode of a container having a cap of the present invention comprises: the abovementioned cap unit; and the container main body to which the cap unit is attached.

In the abovementioned container having a cap, the container main body preferably has a vacuum-insulated structure.

### [Advantage of the Invention]

The cap unit and the container having a cap according to the modes of the present invention described above make it possible, by means of a simple structure, to restrict deep penetration of a water seal gasket inside a protuberance.

### [Brief Description of the Drawings]

[Fig. 1] Fig. 1 is an oblique view showing a container having a cap according to an embodiment of the present invention.
[Fig. 2] Fig. 2 is a view in cross section showing a portion of the container having a cap.
[Fig. 3] Fig. 3 is a side view showing a portion of the container having a cap.
[Fig. 4] Fig. 4 is an oblique view showing a lid element of a cap unit.
[Fig. 5] Fig. 5 is an oblique view showing the lid element of the cap unit.
[Fig. 6] Fig. 6 is a lower-face view showing the lid element of the cap unit.

### [Mode for Implementing the Invention]

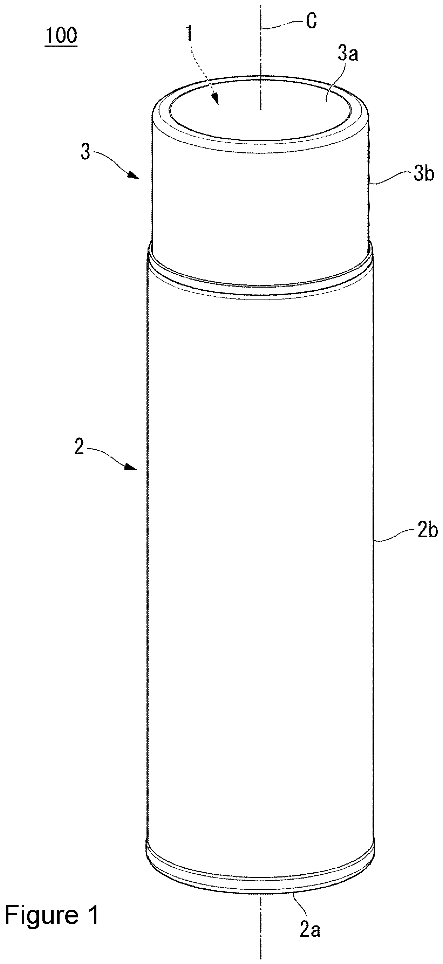

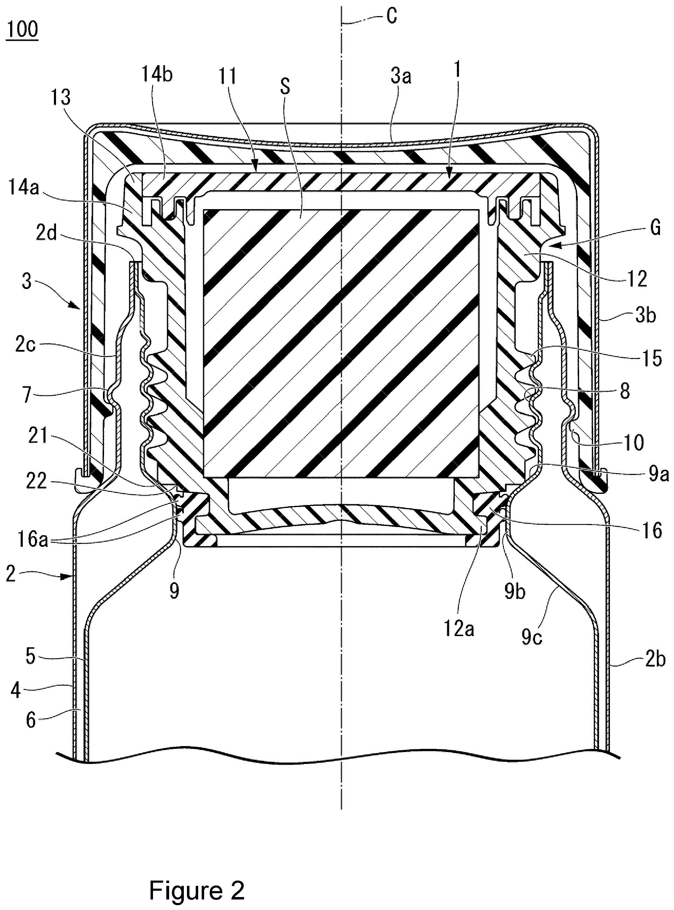

A cap unit 1 and a container 100 having a cap according to an embodiment of the present invention will be described with reference to the drawings. As shown in fig. 1 and 2, the container 100 having a cap of this embodiment comprises: the cap unit 1; a bottomed container main body 2 to which the cap unit 1 is detachably fitted; and a cup 3 which is detachably fitted to the container main body 2 while covering the cap unit 1.

The cap unit 1, the container main body 2 and the cup 3 are arranged coaxially with each other about a centre axis C.

In this embodiment, the direction in which the centre axis C extends will be referred to as the vertical direction. In the vertical direction, the direction from a bottom face portion 2a of the container main body 2 toward the cup 3 will be referred to as the upper side, and the direction from the cup 3 toward the bottom face portion 2a will be referred to as the lower side.

The direction orthogonal to the centre axis C will be referred to as the radial direction. In the radial direction, the direction approaching the centre axis C will be referred to as the radial inner side, or simply as the inner side, and the direction away from the centre axis C will be referred to as the radial outer side, or simply as the outer side.

The direction around the centre axis C will be referred to as the circumferential direction.

The container 100 having a cap is a beverage container which, by virtue of the container main body 2 having a vacuum-insulated structure, is capable of keeping a beverage (liquid) housed in the container main body 2 warm or cold. The container main body 2 has a bottomed cylindrical shape which is open at the top. It should be noted that contents other than a beverage may also be housed in the container main body 2.

Specifically, the container main body 2 is constructed by means of a container having a double structure comprising a bottomed-cylindrical outer container 4 and inner container 5 made of stainless steel or the like, for example, with mouth portions thereof being bonded together in a state in which the inner container 5 is housed inside the outer container 4. Furthermore, an upper end cylindrical portion of the inner container 5 is mated inside an upper end cylindrical portion of the outer container 4, and the upper end cylindrical portions are welded in this mated state. As a result, an upper opening portion 2d of the container main body 2 is formed into a pointed shape known as an "edge-joint weld structure", as shown in fig. 2.

Furthermore, a vacuum insulation layer 6 is provided between the outer container 4 and the inner container 5. The vacuum insulation layer 6 may be formed by closing off vent holes provided in the centre of a bottom face of the outer container 4, inside a chamber decompressed (evacuated) to a high vacuum, for example.

As shown in fig. 1 and 2, the container main body 2 comprises: a substantially circular bottom face portion 2a; a body portion 2b standing upright in a substantially cylindrical shape from an outer circumference of the bottom face portion 2a; and a substantially cylindrical neck portion 2c where the diameter of an upper portion side of the body portion 2b is constricted. Furthermore, an upper end portion of the neck portion 2c opens in a circular shape to form an upper opening portion 2d of the container main body 2.

As shown in fig. 2, an inner circumferential portion of the neck portion 2c has a narrower diameter than an inner circumferential surface of the body portion 2b. Furthermore, a male screw portion 7 is provided on an outer circumferential portion of the neck portion 2c. Meanwhile, a female screw portion 8 is provided on the inner circumferential portion of the neck portion 2c. A protuberance 9 is further provided on an inner side of the neck portion 2c, below the female screw portion 8.

The protuberance protrudes to the radial inner side from the inner circumferential surface of the container main body 2, and extends around the whole circumference in the circumferential direction. The protuberance has an annular shape centred on the centre axis C. The protuberance comprises an upper oblique surface 9a, a cylindrical surface 9b, and a lower oblique surface 9c.

The upper oblique surface 9a is positioned at an upper end portion of the protuberance 9. The upper oblique surface 9a is connected to an inner circumferential lower end portion of the neck portion 2c, and is located further to the radial inner side as it extends downward from the connection with the neck portion 2c. The upper oblique surface 9a has a tapered surface shape which narrows in diameter as it extends downward.

The cylindrical surface 9b is connected to a lower end portion of the oblique surface 9a and extends along the vertical direction. The cylindrical surface 9b has a cylindrical surface shape centred on the centre axis C. It should be noted that the shape of the cylindrical surface 9b is not limited to the shape described above, and it may equally have a shape which narrows in diameter as it extends downward, for example. In that case, the cylindrical surface 9b could be referred to as a tapered surface 9b instead.

The lower oblique surface 9c is connected to a lower end portion of the cylindrical surface 9b, and is located further to the radial outer side as it extends downward from the connection with the cylindrical surface 9b. The lower oblique surface 9c has a tapered surface shape which enlarges in diameter as it extends downward.

The cup 3, which is made of a heat resistant resin such as polypropylene, for example, comprises: a substantially circular bottom wall portion 3a, and a cylindrical circumferential wall portion 3b which protrudes upward (downward in fig. 1 and 2) from the circumference of the bottom wall portion 3a, thereby forming a bottomed cylindrical shape overall. A cover made of stainless steel, for example, is further integrally fitted to the cup 3 by means of an adhesive or the like. That is to say, the cup 3 of this embodiment has a double cylindrical structure: specifically, the bottomed cylindrical member on the inner surface side of the cup 3 is made of a heat resistant resin, and the bottomed cylindrical member on the outer surface side of the cup 3 is made of stainless steel, and these members are rendered as a single piece by means of bonding, etc. while mated together.

The cup 3 is detachably fitted, by means of screwing, to the outer side of the neck portion 2c of the container main body 2 with the bottom wall portion 3a facing upward (upside down). A female screw portion 10 which screws together with the male screw portion 7 is provided for this purpose on the inner circumferential portion of the circumferential wall portion 3b.

It should be noted that the container 100 having a cap of this embodiment has a substantially cylindrical external shape overall, but there is no particular limitation as to the external shape of the container 100 having a cap, and appropriate modifications may be added to suit the size or design, etc. Furthermore, a coating or printing, etc. may also be applied to an outer circumferential surface of the container main body 2 and the cup 3.

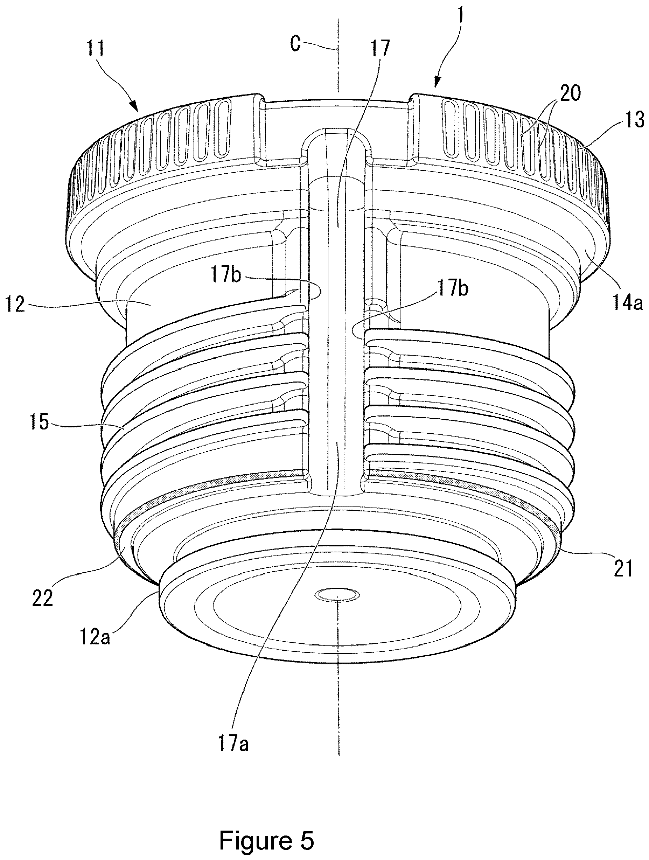

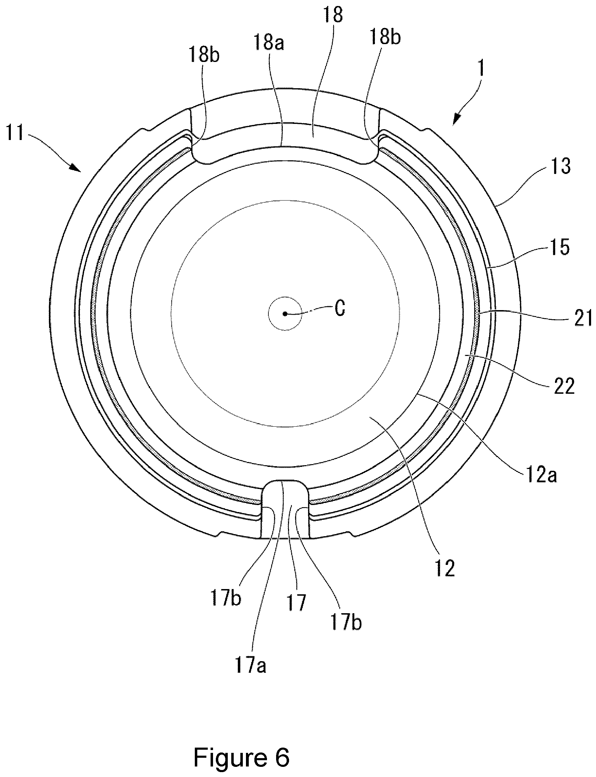

As shown in fig. 2-6, the cap unit 1 of this embodiment comprises a lid element 11 for closing off the upper opening portion 2d of the container main body 2. The lid element 11, which is made of a heat resistant resin such as polypropylene, for example, comprises: an inner plug 12 which is fitted into an inner side of the container main body 2 from the upper opening portion 2d of the container main body 2, and a top lid 13 which is connected to an upper end portion of the inner plug 12 and has a larger outer diameter dimension than the inner plug 12.

The lid element 11 comprises: a bottomed, substantially cylindrical lower lid member 14a constituting the inner plug 12 and a part (the outer circumferential portion) of the top lid 13; and a substantially disc-shaped upper lid member 14b constituting another part (a part inward of the outer circumferential portion) of the top lid 13. The lid element 11 is constructed by integrally attaching the lower lid member 14a to a lower surface of the upper lid member 14b by means of ultrasonic welding or high-frequency welding, etc. It should be noted that a heat insulating material S is arranged in the interior of the lid element 11 in this embodiment, but air may equally serve as a heat insulating layer.

A male screw portion 15 which screws together with the female screw portion 8 of the container main body 2 is provided on the outer circumferential portion of the inner plug 12. The lid element 11 is detachably fitted to the container main body 2 by screwing together the female screw portion 8 and the male screw portion 15. The cap unit 1 of this embodiment therefore has a structure in which the lid element 11, having been attached by screwing together the female screw portion 8 and the male screw portion 15, closes off the upper opening portion 2d of the container main body 2.

It should be noted that the container 100 having a cap of this embodiment has a configuration in which the male screw portion 15 provided on the inner plug 12 is attached by screwing together with the female screw portion 8 of the container main body 2, but this is not limiting. It is equally possible to employ a structure in which a cylindrical circumferential wall portion extending to the lower side from the outer circumferential portion of the top lid 13 is provided on the top lid 13, and the lid element 11 closes off the upper opening portion 2d of the container main body 2 by screwing together a female screw portion provided on the inner circumferential portion of the circumferential wall portion of the top lid 13 and the male screw portion 7 provided on the outer circumferential portion of the neck portion 2c of the container main body 2, although this is not particularly depicted.

As shown in fig. 2, a water seal gasket 16 is detachably fitted to the lower end portion of the inner plug 12. That is to say, the cap unit 1 comprises the water seal gasket 16. The water seal gasket 16 is a ring-shaped sealing member comprising a heat-resistant elastic member such as rubber or an elastomer, for instance silicone rubber or the like. Meanwhile, a flange portion 12a is provided at the lower end portion of the inner plug 12 so as to protrude in an enlarged-diameter direction (the radial outer side) around the whole circumference. The water seal gasket 16 is fitted to this flange portion 12a around the whole circumference.

Furthermore, a plurality of (two in this embodiment) vertically-arranged elastic flange portions 16a are provided on the outer circumferential surface of the water seal gasket 16, protruding in the enlarged-diameter direction around the whole circumference. When the lid element 11 is fitted to the container main body 2, the water seal gasket 16 assumes a state in which the elastic flange portions 16a tightly contact the protuberance 9 of the container main body 2 around the whole circumference while elastically deforming. As a result, the water seal gasket 16 is capable of closing off the area between the inner plug 12 and the protuberance 9 (container main body 2) in a state of attachment to the outer circumferential portion of the inner plug 12 around the whole circumference. It should be noted that the shape of the water seal gasket 16 for allowing tight contact with the protuberance 9 is not necessarily limited to the shape of the elastic flange portions 16a described above, and appropriate modifications may be added in terms of the shape and number, etc.

Meanwhile, the water seal gasket 16 can be removed from the flange portion 12a by itself elastically deforming (stretching and extending). This allows the water seal gasket 16 and the inner plug 12 to be washed separately, keeping the area between the water seal gasket 16 and the inner plug 12 hygienic.

It should be noted that the water seal gasket 16 is not limited to the abovementioned configuration in which it is detachably fitted to the inner plug 12, and it may equally be integrally moulded with the inner plug 12 or integrally fitted to the inner plug 12 by means of bonding.

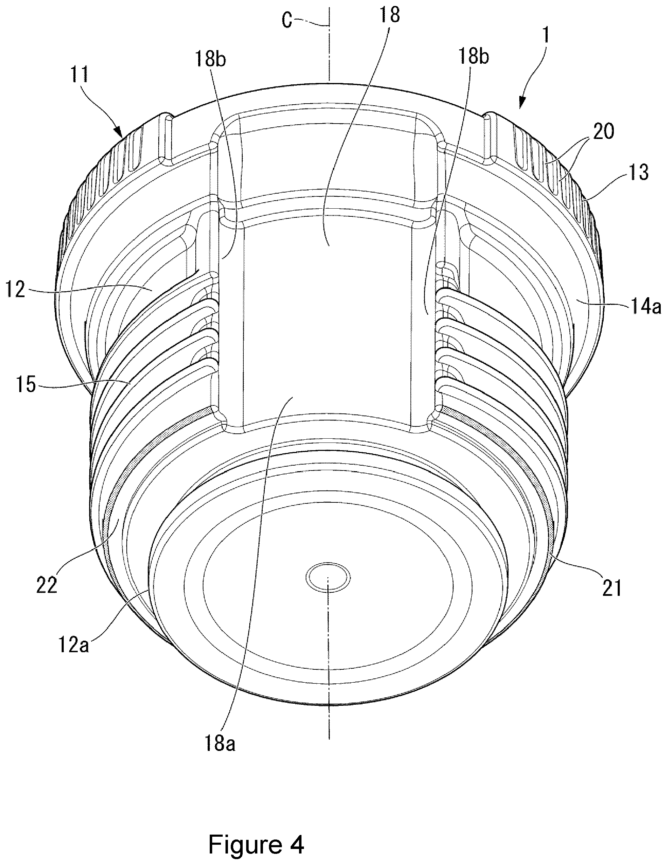

As shown in fig. 4-6, the lid element 11 comprises a first liquid passage groove 17 and a second liquid passage groove 18 at positions facing each other on the outer circumferential portion of the inner plug 12. The first liquid passage groove 17 and the second liquid passage groove 18 are arranged at positions with 180° rotational symmetry about the centre axis C. The first liquid passage groove 17 and the second liquid passage groove 18 each have a pair of side faces 17b, 18b extending upward in parallel with each other from both circumferential sides of respective bottom faces 17a, 18a thereof, and are provided so as to cut into the male screw portion 15 along the vertical direction on the outer circumferential portion of the inner plug 12.

Furthermore, the first liquid passage groove 17 and the second liquid passage groove 18 are provided so as to cut into a part of the lower surface side of the top lid 13. Respective upper end portions of the first liquid passage groove 17 and the second liquid passage groove 18 are therefore positioned substantially in the centre in the vertical direction of the top lid 13. Respective lower end portions of the first liquid passage groove 17 and the second liquid passage groove 18 are arranged on a lower portion of the inner plug 12 and open toward the lower side.

The first liquid passage groove 17 and the second liquid passage groove 18 are of different sizes. That is to say, the first liquid passage groove 17 and the second liquid passage groove 18 have different circumferential width dimensions: specifically, the width dimension of the first liquid passage groove 17 is smaller than the width dimension of the second liquid passage groove 18.

Furthermore, a plurality of anti-slip protrusions 20 are provided on the outer circumferential portion of the top lid 13. The plurality of anti-slip protrusions 20 are provided alongside each other in the circumferential direction. It should be noted that the anti-slip structure of the top lid 13 is not limited to the provision of this plurality of anti-slip protrusions 20, and the structure may be modified, as appropriate.

As shown in fig. 2, the top lid 13 has a flat, topped cylindrical shape or disc shape with a small vertical dimension. The top lid 13 is positioned on the upper side of the upper opening portion 2d.

The outer circumferential portion of the top lid 13 lies over the upper opening portion 2d as seen from the vertical direction. The outer diameter dimension of the top lid 13 is smaller than the outer diameter dimension of the container main body 2 (outer container 4), and is larger than the inner diameter dimension of the upper opening portion 2d. The top lid 13 and the upper opening portion 2d (neck portion 2c) have substantially the same diameter as each other in this embodiment.

Furthermore, the lid element 11 comprises an abutment portion 21 and a step portion 22.

The abutment portion 21 is arranged on a lower portion of the inner plug 12 and abuts the protuberance 9 from the upper side. Specifically, the abutment portion 21 is arranged further to the lower side than the male screw portion 15 and further to the upper side than the flange portion 12a on the lower portion of the outer circumferential portion of the inner plug 12, and contacts the upper oblique face 9a of the protuberance 9 from the upper side. The abutment portion 21 is arranged between the male screw portion 15 and the water seal gasket 16 in the vertical direction. The outer diameter dimension of the abutment portion 21 is smaller than the outer diameter dimension of the male screw portion 15 and larger than the outer diameter dimension of the flange portion 12a. In this embodiment, the outer diameter dimension of the abutment portion 21 is larger than the outer diameter dimension of the water seal gasket 16 in its non-elastically-deformed state. As shown in fig. 2, the abutment portion 21 has a projecting shape that protrudes towards the radial outer side and the lower side, as seen in a longitudinal section parallel to the centre axis C.

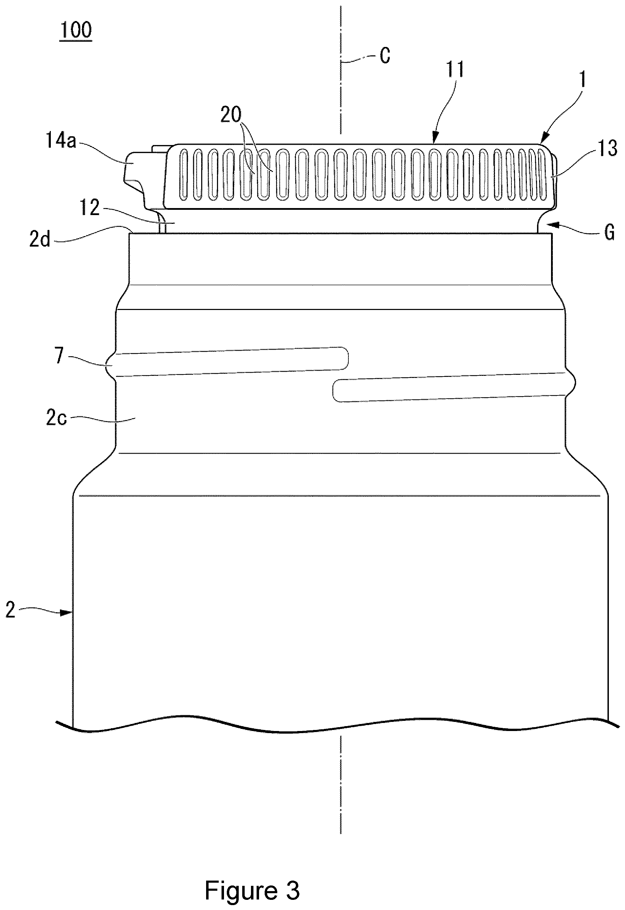

As shown in fig. 2 and 3, in a state in which the abutment portion 21 has abutted the protuberance 9, a gap G is provided in the vertical direction between the top lid 13 and the upper opening portion 2d. The gap G is provided around the whole circumference in the circumferential direction about the centre axis C. In this embodiment, the vertical dimension of the gap G is constant along the circumferential direction on the parts outside the liquid passage grooves 17, 18.

As shown in fig. 4-6, the abutment portion 21 is formed extending in the circumferential direction. In this embodiment, the abutment portion 21 extends in an arc shape at the outer circumferential lower end portion of the inner plug 12 so as to be split by the liquid passage grooves 17, 18.

The step portion 22 is arranged on a lower portion of the inner plug 12. Specifically, as shown in fig. 2, the step portion 22 is arranged on the lower side of the abutment portion 21 and on the upper side of the water seal gasket 16 on the lower portion of the outer circumferential portion of the inner plug 12. The step portion 22 is arranged adjacently to the lower side of the abutment portion 21. The step portion 22 has a recessed shape indented further inward than the abutment portion 21. The step portion 22 faces the upper oblique face 9a of the protuberance 9 with a gap therebetween. That is to say, the step portion 22 does not contact the protuberance 9.

As shown in fig. 4-6, the step portion 22 is formed extending in the circumferential direction. In this embodiment, the step portion 22 extends in an arc shape at the outer circumferential lower end portion of the inner plug 12 so as to be split by the liquid passage grooves 17, 18.

By virtue of the cap unit 1 and the container 100 having a cap of this embodiment described above, when the inner plug 12 has been fitted into the upper opening portion 2d of the container main body 2, the area between the inner plug 12 and the protuberance 9 is sealed by means of the water seal gasket 16, and the abutment portion 21 of the lid element 11 abuts the protuberance 9 from the upper side. From this state of abutment, further downward movement of the inner plug 12 into the upper opening portion 2d is restricted, and therefore deep penetration of the water seal gasket 16 inside the protuberance 9 is suppressed. The vertical position of sealing afforded by the water seal gasket 16 is fixed, thereby providing stable sealing performance (sealing properties).

To be more specific, when a user closes the upper opening portion 2d of the container main body 2 by means of the lid element 11, the abutment portion 21 contacts the protuberance 9 from above, whereby excessive turning (excessive screwing) of the lid element 11 in the closure direction is restricted. Furthermore, for example, even if the temperature of a high-temperature beverage stored in the container main body 2 drops, leading to a reduction in pressure inside the container main body 2 so that a downward pulling force acts on the inner plug 12 and the water seal gasket 16, the abutment portion 21 contacts the protuberance 9 from above, whereby deep penetration of the water seal gasket 16 inside the protuberance 9 is suppressed.

This embodiment therefore makes it possible, by means of a simple structure, to restrict forceful contact between the water seal gasket 16 and the protuberance 9, and also makes it possible to restrict an increase in opening torque when the lid element 11 is next turned in the opening direction to open the container.

Furthermore, the abutment portion 21 is configured to abut the protuberance 9, so the upper end (circumferential edge portion) of the upper opening portion 2d of the container main body 2 and the lower surface of the top lid 13 of the lid element 11 can be set in a state of non-contact. For example, even if the upper end of the upper opening portion 2d of the container main body 2 (the connection between the outer container 4 and the inner container 5) is formed into a pointed shape known as an "edge-joint weld structure", as in this embodiment, this upper end can be arranged at a distance below the top lid 13, and therefore it is possible to restrict a phenomenon where the upper end bites into the lower surface of the top lid 13.

Furthermore, there is no need to adopt a complex structure, such as folding (rounding) and welding either the outer container 4 or the inner container 5 at the upper end of the upper opening portion 2d in order to restrict this phenomenon of biting-in, so the production process can be simplified.

Furthermore, the abutment portion 21 is formed extending in the circumferential direction in this embodiment.

In this case, production is simplified because a die can be easily released after moulding when the lid element 11 is resin-moulded. Furthermore, the function afforded by the abutment portion 21 is more stable because the abutment portion 21 contacts the protuberance 9 along the circumferential direction.

Furthermore, in this embodiment, a contact area between the abutment portion 21 and the protuberance 9 can be kept to a small area because the step portion 22 is provided on the lower side of the abutment portion 21 and on the upper side of the water seal gasket 16. It is therefore possible to restrict forceful contact between the abutment portion 21 and the protuberance 9 caused by a reduction in pressure inside the container main body 2 or thermal expansion of the inner plug 12, etc., for example, and an increase in the opening torque can be more stably suppressed.

Furthermore, in this embodiment, the abutment portion 21 abuts the protuberance 9 from the upper side, thereby stabilizing the depth to which the inner plug 12 penetrates into the container main body 2. The constant gap G can therefore be provided between the upper opening portion 2d of the container main body 2 and the top lid 13. Providing a gap G such as this makes it possible to suppress pinching of fingers, etc. between the upper opening portion 2d of the container main body 2 and the top lid 13 when the user performs a closure operation, and also simplifies the turning operation to provide better ease of operation.

Furthermore, in this embodiment, the outer diameter dimension of the top lid 13 is smaller than the outer diameter dimension of the container main body 2 and larger than the inner diameter dimension of the upper opening portion 2d.

In this case, the top lid 13 can be made more compact while advantageously maintaining the ease of the operation by the user to grip the top lid 13 and rotate the cap unit 1. It should be noted that when the top lid 13 and the upper opening portion 2d have substantially the same diameter, as in this embodiment, the cup 3 can be made more compact, and the outer circumferential surface of the cup 3 and the outer circumferential surface of the container main body 2 (outer container 4) can be formed substantially flush, which is more preferable.

It should be noted that the present invention is not limited to the embodiment described above, and various modifications, etc. may be made within a scope that does not depart from the essential point of the present invention.

The abovementioned embodiment describes an example in which the abutment portion 21 extends along the circumferential direction, but this is not limiting. The abutment portion 21 may be in the form of a protrusion which is arranged on a lower portion of the inner plug 12 and abuts the protuberance 9 from the upper side. Furthermore, a plurality of abutment portions 21 may be provided in a row at equal intervals in the circumferential direction.

Furthermore, the abutment portion 21 may also have a helical shape or the like, the vertical position of which varies around the circumferential direction.

The abovementioned embodiment describes an example in which the present invention was applied to the container 100 having a cap which, by virtue of the container main body 2 having a vacuum-insulated structure, has a heat-retention or cold-retention function, but this is not limiting. That is to say, the present invention may be broadly applied to containers having a cap, in which a cap unit is detachably fitted to the neck portion of a container main body.

The components described in the abovementioned embodiment and variant examples, etc. may be combined within a scope that does not depart from the essential point of the present invention, and, furthermore, components may be added, omitted, substituted or otherwise modified.

Furthermore, the present invention is not limited by the abovementioned embodiment, etc. and is limited only by the scope of the claims.

### [Key to Symbols]

- 1: Cap unit
- 2: Container main body
- 2d: Upper opening portion
- 8: Female screw portion
- 9: Protuberance
- 11: Lid element
- 12: Inner plug
- 13: Top lid
- 15: Male screw portion
- 16: Water seal gasket
- 21: Abutment portion
- 22: Step portion
- 100: Container having a cap
- G: Gap

## Claims

1. Cap unit comprising:
a lid element provided with an inner plug which is fitted into an inner side of a container main body that is open at the top, from an upper opening portion of the container main body; and
a water seal gasket for sealing an area between the inner plug and a protuberance provided on the inner side of the container main body, in a state of attachment to an outer circumferential portion of the inner plug along the whole circumference,
wherein the lid element has a structure for closing off the upper opening portion, and
the lid element has an abutment portion which is arranged on a lower portion of the inner plug and abuts the protuberance from an upper side.

2. Cap unit according to claim 1, wherein the abutment portion is formed extending in a circumferential direction.

3. Cap unit according to claim 1 or 2, wherein the lid element has a step portion arranged on a lower side of the abutment portion and on an upper side of the water seal gasket, and
the step portion faces the protuberance, is indented further inward than the abutment portion, and does not contact the protuberance.

4. Cap unit according to any one of claims 1 to 3, wherein the inner plug is attached to the container main body by screwing a male screw portion provided on the outer circumferential portion of the inner plug together with a female screw portion provided on an inner circumferential portion of the container main body.

5. Cap unit according to any one of claims 1 to 4, wherein the lid element has a top lid connected to an upper end portion of the inner plug and having a larger outer diameter dimension than the inner plug,
the top lid is positioned on an upper side of the upper opening portion, and
a gap is provided between the top lid and the upper opening portion in a state in which the abutment portion has abutted the protuberance.

6. Cap unit according to claim 5, wherein the outer diameter dimension of the lid element is smaller than the outer diameter dimension of the container main body and larger than an inner diameter dimension of the upper opening portion.

7. Container having a cap, comprising:
a cap unit according to any one of claims 1 to 6; and
the container main body to which the cap unit is attached.

8. Container having a cap according to claim 7, wherein the container main body has a vacuum-insulated structure.
